# EUROPÄISCHE PATENTSCHRIFT

(11) **EP 1 089 324 B1**
(45) Veröffentlichungstag und Bekanntmachung des Hinweises auf die Patenterteilung: **20.03.2013**
(21) Anmeldenummer: 00203248.0
(22) Anmeldetag: 19.09.2000
(51) Int. Cl.: H01K 9/08

(54) **Glühlampe**
Incandescent lamp
Lampe à incandescence

(30) Priorität: 28.09.1999 DE 19946297
(43) Veröffentlichungstag der Anmeldung: 04.04.2001
(73) Patentinhaber: Philips Intellectual Property & Standards GmbH, 20099 Hamburg (DE); Koninklijke Philips Electronics N.V., 5621 BA Eindhoven (NL)
(72) Erfinder: Sischka, Ingolf, 52064 Aachen (DE)
(74) Vertreter: Volmer, Georg

(56) Entgegenhaltungen:
- EP-A2- 0 168 015
- DE-A- 19 510 542
- DE-A1- 1 917 495
- DE-A1- 2 112 052
- DE-A1- 4 039 948
- PL-A1- 295 778
- US-A- 4 686 410
- US-A- 5 614 788

## Beschreibung

Die Erfindung betrifft eine Glühlampe mit mindestens einer Glühwendel, die zur Erzeugung eines Fernlichtbündels in einem Kraftfahrzeugscheinwerfer eingesetzt werden kann, mit dem zusätzlich die Funktion eines Tagfahrlichtbündels realisiert werden kann.

Viele Verkehrsunfälle werden durch unzureichende Wahrnehmung der Verkehrsteilnehmer auch bei Tageslicht verursacht. Zur Vermeidung von Unfällen können Kraftfahrzeuge daher mit einem sogenannten Tagfahrlicht (Daytime Running Light, DRL) ausgestattet werden. Das Tagfahrlicht muß derart gestaltet sein, dass das Fahrzeug von anderen Verkehrsteilnehmern besser wahrgenommen werden kann, ohne diese gravierend zu stören (z.B. durch Blendung). Die Aktivierung eines solchen Tagfahrlichtes kann vorzugsweise an bestimmte Umgebungsparameter, wie z.B. Helligkeit und laufender Motor, gekoppelt sein, und ist dann permanent eingeschaltet. Sobald das Umgebungslicht unter einen bestimmten Wert fällt, muß vom Tagfahrlicht auf Abblendlicht umgeschaltet werden. Weiterhin wird bei stehendem Motor das Tagfahrlicht ebenfalls abgeschaltet, um insbesondere den Stromverbrauch zu senken. Die Anforderungen an ein Tagfahrlichtbündel ähneln in der symmetrischen Ausrichtung auf den Horizont dem Fernlichtbündel eines Kraftfahrzeugscheinwerfers. Allerdings weichen die Anforderungen in der Lichtverteilung und der Intensität stark ab. Die Intensität ist deutlich geringer und horizontal breiter ausgedehnt. Im Gegensatz zu einer relativ scharfen Fokussierung auf den Horizont (sog. HV-Punkt auf der Referenzachse) muß das Tagfahrlichtbündel breiter und flacher sein. Die Anforderungen für das Tagfahrlicht (DRL) sind in ähnlicher Weise wie für das Abblendlicht (Low Beam) und das Fernlicht (High Beam) durch gesetzliche Regelungen festgelegt. Zusätzlich muß ein Tagfahrlicht eine hohe Lebensdauer und niedrigen Stromverbrauch besitzen.

Bekannte Lösungen zur Realisierung einer Tagfahrlichtfunktion beruhen auf der Reduzierung der Spannung für vorhandene Scheinwerfer (Dimmen). Das Dimmen der existierenden Glühlampen führt zu einem deutlichen Effizienzverlust, da der Anteil des erzeugten sichtbaren Lichtes am gesamten Leistungsverbrauch der Glühlampe stark abnimmt. Daher entsteht ein stark erhöhter Energieverbrauch, der im Kraftfahrzeug auch eine unerwünschte Erhöhung des Treibstoffverbrauchs zur Folge hat. Hinzu kommt bei der Realisierung mittels des Abblendlichtes, dass dessen Lichtverteilung aufgrund gesetzlicher Regelungen vornehmlich auf die Straße gerichtet ist, um bei Dunkelheit entgegenkommende Fahrer nicht zu blenden. Diese Verteilung bleibt auch im gedimmten Zustand bei Helligkeit erhalten, so dass nur ein kleiner Teil des Lichtes zur Verbesserung der Wahrnehmung durch andere Verkehrsteilnehmer beiträgt. Dadurch besitzt ein derart realisierter Tagfahrlichtscheinwerfer nur eine geringe Effizienz und eignet sich nicht als energiesparendes Tagfahrlicht (DRL). Die Verwendung eines gedimmten Fernlichtes als Tagfahrlicht hat ebenfalls den Nachteil einer ungeeigneten Lichtverteilung des Fernlichtes für die Funktion als Tagfahrlicht. Da das Fernlichtbündel zu stark fokussiert ist, erfüllt die Verteilung der Lichtintensität eines Fernlichtbündels nicht die gesetzlichen Anforderungen an ein Tagfahrlichtbündel. Weiterhin müßte das Fernlicht zur Erfüllung der Anforderung an die maximale Lichtstärke des Tagfahrlichtes so sehr gedimmt werden, dass der Halogenkreislauf im Kolben der Glühlampe nicht mehr aufrechterhalten werden kann. Daher kommt es zu Abschwärzungen an der Kolbeninnenseite und zu einer Verkürzung der Lebenszeit.

In der amerikanischen Patentschrift US 5,614,788 ist ein automatisiertes, auf Umgebungsbedingungen reagierendes Tagfahrlichtsystem bekannt. Das automatisierte Tagfahrlichtsystem für Transportfahrzeuge mit Frontscheinwerfern besitzt einen Schaltkreis zur Steuerung des Tagfahrlichtes, der die Glühwendel des Fernlichtes immer dann mit einer reduzierten Spannung versorgt, wenn während Tageslichtes die Zündung des Fahrzeugs an und der Anlasser aus ist. Ein solches mittels eines Fernlichtes realisiertes Tagfahrlichtsystem hat die bekannten Nachteile.

Des weiteren ist aus der deutschen Offenlegungsschrift DE 195 10 542 ein Scheinwerferschaltkreis bekannt, der einen Wechsel von einem normalen Scheinwerfer, einem Abblend-Scheinwerfer und einem Tageslichtscheinwerfer (DRL, daytime running light) mittels eines Mehrfach-Steuerungsschaltkreises ohne eine wesentliche Änderung der Verdrahtung in einem Kabelbaum durchführen kann. Trotz einer möglichen Vereinfachung bei der Verdrahtung im Kabelbaum beim Wechsel des Scheinwerfers, weist der Tagfahrlichtscheinwerfer die durch das Dimmen entstehenden, bekannten Nachteile auf.

Aus der PL295778A1 ist bekannt, dass Tagfahrlicht durch eine zusätzliche Wendel geringerer Leistung von z.B. 21 W in einer Mehrfadenlampe zu realisieren. Konkret vorgeschlagen wird eine Dreifadenlampe mit je einer Wendel für Abblend-, Fern-, und Tagfahrlicht. Über die genaueren weiteren Eigenschaften des dort vorgeschlagenen Tagfahrlichts werden keine näheren Aussagen getroffen.

Die Aufgabe der Erfindung ist es daher, eine Glühlampe zu schaffen, die eine verbesserte Realisierung einer Tagfahrlichtfunktion in einem Kraftfahrzeugscheinwerfer ermöglicht.

Die Aufgabe wird dadurch gelöst, dass die Glühlampe wenigstens eine erste Glühwendel zur Erzeugung eines Fernlichtbündels in einem Kraftfahrzeugscheinwerfer und wenigstens eine zweite Glühwendel zur Erzeugung eines Tagfahrlichtbündels in einem Kraftfahrzeugscheinwerfer besitzt. Durch die Kombination der zweiten Glühwendel mit der Glühwendel für das Fernlicht, entsteht eine Lampe, die auf überraschend einfache Weise die Funktion des Fernlichtes und des Tagfahrlichtes bietet. Die erfinderische Integration in eine Glühlampe schafft die Möglichkeit der Verwendung in unterschiedlichen Kraftfahrzeugscheinwerfern, ohne dass bisherige Funktionen beeinträchtigt werden. Dabei muß der Kraftfahrzeugscheinwerfer nicht neu gestaltet werden, sondern kann bei angepaßtem Reflektor weiter verwendet werden.

Gemäß der Erfindung ist vorgesehen, dass die zweite Glühwendel auf der Achse der ersten Glühwendel angeordnet ist. Die zweite Glühwendel kann dabei von einem Sockel der Glühlampe ausgehend hinter oder vor der ersten Glühwendel angeordnet sein. Die Anordnung der beiden Glühwendeln auf einer gemeinsamen optischen Achse bietet gute Möglichkeiten zur Gestaltung eines Reflektors, in den die Glühlampe eingesetzt werden kann und der in einem Scheinwerfer sowohl ein geeignetes Fernlicht- als auch Tagfahrlichtbündel erzeugt. Allerdings sind auch andere Anordnungen der beiden Glühwendeln in einem Kolben der Glühlampe denkbar, wenn die Anforderungen der Verwendung eine andere Anordnung (beispielsweise parallel nebeneinander oder rechtwinklig zueinander) günstiger erscheinen lassen. Diese Anforderungen können zum Beispiel durch gesetzliche Regelungen für den Scheinwerfer, in den die Glühlampe eingebaut werden soll oder für die Glühlampe selber sein. Ebenso können besondere Anforderungen aufgrund des Herstellungsverfahrens entstehen.

Für eine vorteilhafte Weiterbildung der erfinderischen Glühlampe ist eine Glühwendel mit einer Leistung von höchstens 30W zur Bildung der zweiten Glühwendel vorgesehen. Durch geeignete Wahl des Querschnitts, der Länge, des verwendeten Materials und anderer Parameter für die zweite Glühwendel, die das Tagfahrlichtbündel erzeugt, kann das Tagfahrlicht optimiert werden. Insbesondere wird die Glühwendel derart ausgelegt werden, dass bei einer Leistung von etwa 20W (maximal 30W) eine möglichst hohe Effizienz (erzeugte Lichtmenge bei verbrauchter Leistung 1m/W) der Lampe erzielt wird. Unter Berücksichtigung der Anforderungen (insbesondere gesetzlicher Regelungen) wird ein Wert von etwa 20W für ein Tagfahrlicht als vorteilhaft angesehen. Zum Vergleich besitzt die erste Glühwendel zur Erzeugung des Fernlichtbündels meist eine Leistung von 65W.

Weitere vorteilhafte Weiterbildungen der Erfindung sind in den noch vorhandenen Ansprüchen angegeben.

Im folgenden soll ein Ausführungsbeispiel der Erfindung anhand von Zeichnungen näher erläutert werden. Dabei zeigen
- Figur 1:: eine schematische Darstellung einer erfindungsgemäßen Glühlampe und
- Figur 2:: eine schematische Darstellung der erfindungsgemäßen Glühlampe in einem Reflektor.

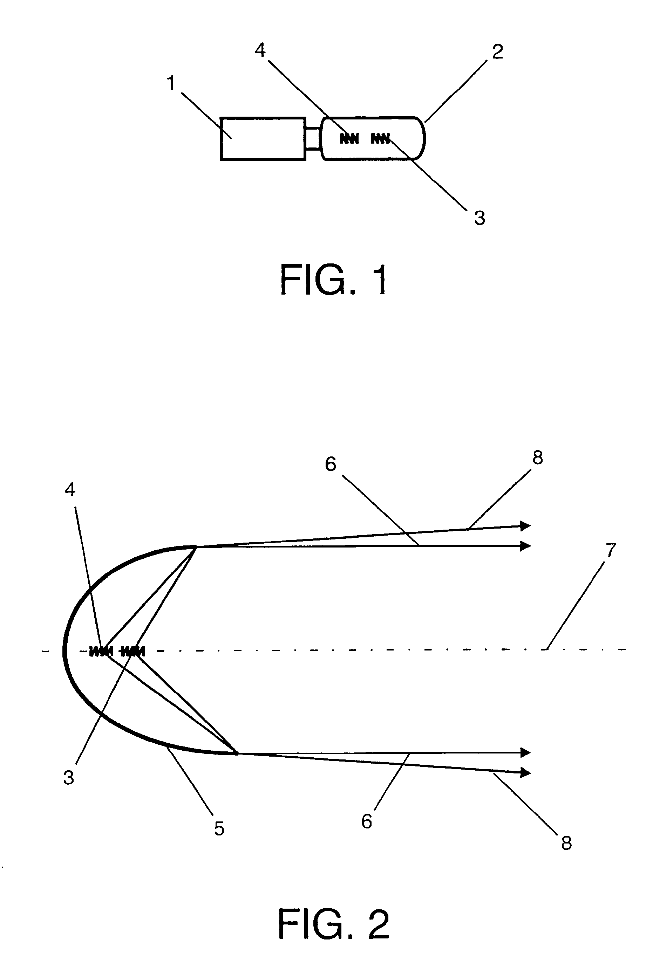

In der Figur 1 ist der prinzipielle Aufbau einer Glühlampe gemäß der Erfindung dargestellt. Ein Sockel 1 ist gasdicht mit einem Kolben 2 verbunden. Der transparente Glaskolben 2 ist in bekannter Weise vakuumdicht abgeschlossen und enthält ein Halogen. Im Kolben 2 sind eine erste Glühwendel 3 und eine zweite Glühwendel 4 angeordnet, die ein Fernlichtbündel und ein Tagfahrlichtbündel erzeugen, wenn die Glühlampe in einen Kraftfahrzeugscheinwerfer eingebaut wird. Der nicht dargestellte Kraftfahrzeugscheinwerfer besitzt einen Reflektor mit einer geeigneten Aufnahme für den Sockel 1, so dass die Glühlampe eingepaßt und fixiert werden kann.

Die Figur 2 zeigt in schematischer Darstellung die Anordnung der beiden Glühwendeln 3 und 4 der erfindungsgemäßen Glühlampe in einem Reflektor 5, der Teil eines nicht dargestellten Scheinwerfers ist. Die Glühwendel 3 für das Fernlicht erzeugt mit dem Reflektor 5 ein parallel austretendes Bündel 6. Die Glühwendel 4 für das Tagfahrlicht liegt wie die Glühwendel 3 mit der Wendelachse auf einer optischen Achse 7 des Scheinwerfers und ist von der Öffnung des Reflektors 5 aus hinter der Glühwendel 3 angeordnet. Die Glühwendel 4 erzeugt mit dem Reflektor 5 ein dem Tagfahrlicht entsprechendes breiteres Bündel 8, weniger scharf fokussiert aus dem Reflektor 5 austritt. Zur besseren Übersichtlichkeit ist bei dieser funktionalen Beschreibung der Kolben 2 und der Sockel 1 der Glühlampe nicht dargestellt. Die Glühlampe wird in bekannter Weise durch eine geeignete Aufnahme für den Sockel 1 im Reflektor 5 befestigt. Dabei ist eine gute Justierung und anschließende Fixierung der Glühlampe an der gewünschten Position im Reflektor 5 zu beachten. Der Reflektor 5 ist derart gestaltet, dass dann die beiden Bündel 6 und 8 erzeugt werden können.

## Patentansprüche

1. Glühlampe mit wenigstens einer ersten Glühwendel (3) zur Erzeugung eines Fernlichtbündels (6) in einem Kraftfahrzeugscheinwerfer und mit wenigstens einer zweiten Glühwendel (4) zur Erzeugung eines Tagfahrlichtbündels (8) in einem Kraftfahrzeugscheinwerfer
**dadurch gekennzeichnet,**
**dass** eine Anordnung der zweiten Glühwendel (4) auf der Achse (7) der ersten Glühwendel (3) vorgesehen ist.

2. Glühlampe nach Anspruch 1,
**dadurch gekennzeichnet,**
**dass** eine Glühwendel (4) mit einer Leistung von höchstens 30W zur Bildung der zweiten Glühwendel (4) vorgesehen ist.

3. Glühlampe nach Anspruch 1,
**dadurch gekennzeichnet,**
**dass** die zweite Glühwendel (4) von einem Sockel (1) der Glühlampe ausgehend vor der ersten Glühwendel (3) angeordnet ist.

4. Glühlampe nach Anspruch 1,
**dadurch gekennzeichnet,**
**dass** die zweite Glühwendel (4) von einem Sockel (1) der Glühlampe ausgehend hinter der ersten Glühwendel (3) angeordnet ist.

5. Glühlampe nach Anspruch 1,
**dadurch gekennzeichnet,**
- **dass** die erste (3) und die zweite Glühwendel (4) in einem gasdichten, transparenten Gefäß (2) eingefügt sind,
- **dass** das gasdichte, transparente Gefäß (2) auf einer Seite gasdicht mit einem Sockel (1) verbunden ist,
- **dass** eine erste elektrische Zuführung zu einem ersten Anschluss der ersten Glühwendel (3), eine zweite elektrische Zuführung zu einem ersten Anschluss der zweiten Glühwendel (4) und eine dritte elektrische Zuführung zu einem zweiten Anschluss der ersten (3) und zweiten Glühwendel (4) durch den Sockel (1) geführt ist.

## Claims

1. Incandescent lamp with at least one initial filament (3) for generating a high beam (6) in a motor vehicle headlight and with at least one second filament (4) for producing a DRL package (8) in a motor vehicle headlight,
**characterised by** the fact that the second filament (4) is supposed to be arranged on the axis (7) of the first filament (3).

2. Incandescent lamp according claim 1,
**characterised by** the fact that a filament (4) with an output of max. 30W is used in the formation of the second filament (4).

3. Incandescent lamp according claim 1,
**characterised by** the fact that the second filament (4) from a base (1) of the bulb is arranged such that it leads out from the initial filament (3).

4. Incandescent lamp according claim 1,
**characterised by** the fact that the second filament (4) from a base (1) of the bulb is arranged such that it leads out from behind the initial filament (3).

5. Incandescent lamp according claim 1,
**characterised by**
- the fact that the first (3) and the second filaments (4) are embedded in a gas-tight, transparent container (2),
- the fact that the gas-tight, transparent container (2) has a gas-tight connection to a base (1) on one side
- the fact that a first electrical feed is connected to a first end of the first filament (3), a second electrical feed is connected to a first end of the second filament (4), and a third electrical feed is connected to a second end of the first filament (3) and the second one (4), through the base (1).

## Revendications

1. Lampe à incandescence comportant au moins un premier filament (3) pour produire un faisceau de phares (6) dans des phares de véhicule automobile et au moins une deuxième lampe à incandescence (4) pour produire un faisceau de feux de croisement (8) dans des phares de véhicule automobile, **caractérisé en ce que**
une disposition du deuxième filament (4) sur l'axe (7) du premier filament (3) est prévue.

2. Lampe à incandescence selon la revendication 1, **caractérisée en ce qu'**un filament (4) présentant une puissance au plus de 30 W pour la formation du deuxième filament (4) est prévu.

3. Lampe à incandescence selon la revendication 1, **caractérisée en ce que** le deuxième filament (4) est disposé à partir d'un socle (1) de la lampe à incandescence devant le premier filament (3).

4. Lampe à incandescence selon la revendication 1, **caractérisée en ce que** le deuxième filament (4) est disposé à partir d'un socle (1) de la lampe à incandescence à l'arrière du premier filament (3).

5. Lampe à incandescence selon la revendication 1,
**caractérisée en ce que**
- les premier (3) et deuxième filaments (4) sont intégrés dans un récipient transparent étanche aux gaz (2),
- le récipient transparent, étanche aux gaz (2) est relié de façon étanche aux gaz avec un socle (1),
- une première alimentation électrique conduite à un premier raccordement du premier filament (3), une deuxième alimentation conduit à un premier raccordement du deuxième filament (4) et une troisième alimentation électrique conduit à un deuxième raccordement des premier (3) et deuxième filaments (4) au travers du socle (1).
